# EUROPÄISCHE PATENTANMELDUNG

(11) **EP 4 140 760 A1**
(43) Veröffentlichungstag der Anmeldung: **01.03.2023**
(21) Anmeldenummer: 21193858.4
(22) Anmeldetag: 30.08.2021
(51) Int. Cl.: B42D 25/36

(54) **SICHERHEITSELEMENT FÜR WERTDOKUMENTE ODER SICHERHEITSDOKUMENTE**

(71) Anmelder: Hueck Folien Gesellschaft m.b.H., 4342 Baumgartenberg (AT)
(72) Erfinder: FUCHSBAUER, Anita, 4030 Linz (AT); EGGINGER, Martin, 4040 Linz (AT); TRASSL, Stephan, 4342 Baumgartenberg (AT)
(74) Vertreter: Burger, Hannes

(57) **Zusammenfassung**

Die Erfindung betrifft ein Sicherheitselement (1), ein Polymersubstrat (8), sowie ein Wertdokument oder Sicherheitsdokument. Das Sicherheitselement (1) für Wertdokumente oder Sicherheitsdokumente umfasst zumindest ein Sicherheitsmerkmal (2), wobei vorgesehen ist, dass das Sicherheitselement (1) zumindest ein recyceltes Material (3), und/oder zumindest ein Material aus nachwachsenden Rohstoffen, und/oder zumindest ein biologisch und/oder marin abbaubares Material (4) umfasst.

## Beschreibung

Die Erfindung betrifft ein Sicherheitselement, ein Polymersubstrat, sowie ein Wertdokument oder Sicherheitsdokument.

Jährlich werden weltweit Milliarden Banknoten neu gedruckt und alte Banknoten aus dem Verkehr genommen. Banknoten bestehen entweder aus einem Polymersubstrat und/oder beinhalten Sicherheitselemente in Form von Sicherheitsfäden, Transferfäden, Streifen und/oder Patches, welche im Wesentlichen aus einer polymeren Trägerfolie und Sicherheitsmerkmalen (z.B. magnetischen Codierungen, Prägelackschichten, metallisierten Schichten, farbkippenden Materialien bzw. Schichten, etc.) bestehen. Papier-Banknoten werden üblicherweise entweder einer thermischen Verwertung zugeführt, kompostiert, oder in einem Recycling- bzw. Downcycling-Prozess beispielsweise zu Dämmstoffen verarbeitet. Polymer-Banknoten werden entweder einer thermischen Verwertung zugeführt, oder in einem Recycling- bzw. Downcycling-Prozess zu Kunststoff-Produkten verarbeitet.

Dem globalen Trend zu nachhaltigen Produkten entsprechend, sind der Fachwelt beispielsweise aus der WO2020152505A1 und der WO2020156655A1 biologisch abbaubare Cellulosefaser-basierte Sicherheitselemente, sowie biologisch abbaubare Cellulosefaser-basierte Polymer-Banknoten bekannt geworden.

Aufgabe der vorliegenden Erfindung war es, die noch bestehenden Nachteile des Standes der Technik zu überwinden und die Nachhaltigkeit von Sicherheitselementen, Polymersubstraten, sowie von Wertdokumenten oder Sicherheitsdokumenten weiter zu verbessern, welche zudem ein hohes Maß an Fälschungssicherheit gewährleisten.

Diese Aufgabe wird durch ein Sicherheitselement, ein Polymersubstrat, sowie durch ein Wertdokument oder Sicherheitsdokument gemäß den Ansprüchen gelöst.

In dem vorliegenden Zusammenhang werden unter Wertdokumenten und Sicherheitsdokumenten insbesondere Banknoten, Reisepässe, Ausweise, ID-Karten und ID-Dokumente, Fahrscheine, Karten für Veranstaltungen, Wertpapiere etc. verstanden. Der Begriff Papier ist umgangssprachlich zu verstehen und definiert weniger das verwendete Material als die resultierende Form des Dokuments. Mit dem Begriff Wertdokument oder Sicherheitsdokument sind demnach, sofern in diesem Dokument nicht explizit angeführt, stets sowohl Cellulosefaser-basierte Wertdokumente oder Sicherheitsdokumente, wie beispielsweise Papier-Banknoten, als auch Polymer-Wertdokumente oder Polymer-Sicherheitsdokumente, wie beispielsweise Polymer-Banknoten, gemeint. Polymer-Wertdokumente oder Polymer-Sicherheitsdokumente umfassen dabei üblicherweise Polymersubstrate, welche als Trägermaterial für beispielsweise Sicherheitselemente, diverse funktionale Schichten, sowie für Druckschichten dienen. Polymersubstrate können aber auch beim Aufbau von Sicherheitselementen zweckmäßig sein, und hier ebenso eine Funktion als Trägermaterial übernehmen.

Sicherheitselemente mit zumindest einem Sicherheitsmerkmal sind der Fachwelt grundsätzlich bekannt. Zum Beispiel kann es sich bei Sicherheitselementen um Fäden, Streifen, Patches, Transferfolien oder auch um Overlayfolien für beispielsweise Reisepässe und Ausweiskarten handeln. Sicherheitselemente können aus einer oder mehrerer Schichten oder auch aus einer oder mehrerer Folien aufgebaut sein. Der Begriff Schicht kann sowohl eine einzelne Schicht als auch einen Verbund oder eine Schichtung aus mehreren Schichten beschreiben. Dabei kann es sich beispielsweise um mehrere gleichartige, aber auch um mehrere, verschiedene Schichten oder Lagen handeln. An dieser Stelle sei darauf hingewiesen, dass zwischen den in diesem Dokument beschriebenen Schichten eine oder auch mehrere Zwischenschichten angeordnet sein können. Es ist somit nicht zwingend erforderlich, dass die beschriebenen Schichten einander kontaktieren. Weiters sei darauf hingewiesen, dass der Begriff Schicht in diesem Dokument so zu verstehen ist, dass eine Schicht auch aus mehreren Teilschichten aufgebaut sein kann. Dasselbe gilt für den Begriff Folie.

Es sei auch darauf hingewiesen, dass der Begriff "insbesondere" in diesem Dokument so zu verstehen ist, dass es sich dabei um eine mögliche speziellere Ausbildung oder nähere Spezifizierung eines Gegenstands handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

Die Erfindung betrifft ein Sicherheitselement für Wertdokumente oder Sicherheitsdokumente mit zumindest einem Sicherheitsmerkmal. Dabei ist vorgesehen, dass das Sicherheitselement zumindest ein recyceltes Material, und/oder zumindest ein Material aus nachwachsenden Rohstoffen, und/oder zumindest ein biologisch und/oder marin abbaubares Material umfasst.

Sicherheitsmerkmale erhöhen die Fälschungssicherheit und dienen der Echtheitszertifizierung von Sicherheitselementen, respektive von Wertdokumenten und Sicherheitsdokumenten.

Bei dem zumindest einen recycelten Material kann es sich um jegliche Art von recycelbaren Materialien oder Materialzusammensetzungen handeln. Beispielsweise sind damit jegliche Art von Kunststoffen umfasst, sowie auch Metalle, Metalllegierungen oder Metallverbindungen. Auch diverse chemische Zusammensetzungen können recycelbar sein und damit als recyceltes Material in dem Sicherheitselement umfasst sein. Weil Sicherheitselemente zumeist aus mehreren Schichten, Folien bzw. Komponenten aufgebaut sind, kann es dabei zweckmäßig sein, wenn in diesen Einzelbestandteilen verschiedene Arten von recyceltem Material eingesetzt werden.

Dadurch wird die Nachhaltigkeit des Sicherheitselements bzw. dessen gesamter Produktlebenszyklus verbessert, da durch den Einsatz des zumindest einen recycelten Materials eine nachhaltige Herstellung von fälschungssicheren Sicherheitselementen ermöglicht ist. Durch den Einsatz von zumindest einem recycelten Material bei der Herstellung von Sicherheitselementen werden Mittel geschaffen, welche den steigenden ökologischen Anforderungen entsprechen und welche gleichzeitig die erforderliche Fälschungssicherheit garantieren.

Durch den alternativen oder zusätzlichen Einsatz von zumindest einem Material aus nachwachsenden Rohstoffen und/oder von biologisch und/oder marin abbaubarem Material kann der nachhaltige Lebenszyklus des Sicherheitselements weiter verbessert werden. Darüber hinaus kann damit ein wertvoller Beitrag zum Umweltschutz geleistet werden. Bei dem Material aus nachwachsenden Rohstoffen bzw. bei dem biologisch und/oder marin abbaubaren Material kann es sich um ein anderes Material als dem recycelten Material handeln. Besonders nachhaltig ist es jedoch, wenn es sich bei dem Material aus nachwachsenden Rohstoffen bzw. bei dem biologisch und/oder marin abbaubaren Material um dasselbe Material handelt, wie dem recycelten Material.

Dabei können für die Synthese der entsprechenden chemischen Rohstoffe nachwachsende Rohstoffe eingesetzt werden. Kunststoffe können beispielsweise unterschieden werden in sogenannte Drop-Ins und neue biobasierte Kunststoffe. Unter Drops-Ins werden Biokunststoffe verstanden, welche auf nachwachsenden Rohstoffen basieren und bei denen bestehende Prozesse und Wertschöpfungsketten bei der Verarbeitung, der Nutzung und des Recyclings im Wesentlich unverändert bleiben (z.B. PA, PU, PE, PP, PET, etc.). Neue biobasierte Kunststoffe ersetzen Kunststoffe auf fossiler Basis (z.B. Thermoplastische Stärke (TPS), Polymilchsäure (PLA), Cellulose- oder Lignin-basierte Kunststoffe, etc.), wobei eine Nutzung als Alternative zu fossilbasierten Kunststoffen noch nicht für alle biobasierten Kunststoffe vollständig etabliert ist.

Biologisch abbaubare Kunststoffe bestehen aus Polymeren, die durch Mikroorgansimen unter bestimmten Bedingungen zersetzt werden können. Der Begriff "marin abbaubar" oder "marine degradable" bezieht sich auf die Möglichkeit eines natürlichen Abbaus unter marinen Umweltbedingungen. Zu biologisch abbaubaren und zudem biobasierten Kunststoffen zählen beispielsweise Polyhydroxyalkanoate (PHA), oder thermoplastische Stärke (TPS). Zu biologisch abbaubaren Kunststoffen zählen beispielsweise Polymilchsäure (PLA), Polycaprolacton (PCL), Polybutylensuccinat (PBS), oder Polybutylenadipat-terephthalat (PBAT).

Des Weiteren kann es zweckmäßig sein, wenn das Sicherheitselement mindestens 10%, bevorzugt mindestens 20%, besonders bevorzugt mindestens 30%, insbesondere mindestens 50% des zumindest einen recycelten Materials und/oder des zumindest einen Materials aus nachwachsenden Rohstoffen und/oder des zumindest einen biologisch und/oder marin abbaubaren Materials umfasst oder wenn das Sicherheitselement mindestens 10%, bevorzugt mindestens 20%, besonders bevorzugt mindestens 30%, insbesondere mindestens 50% mehrerer recycelter Materialien und/oder mehrerer Materialien aus nachwachsenden Rohstoffen und/oder mehrerer biologisch und/oder marin abbaubarer Materialien umfasst.

Ferner kann vorgesehen sein, dass das zumindest eine recycelte Material, und/oder das zumindest eine Material aus nachwachsenden Rohstoffen, und/oder das zumindest eine biologisch und/oder marin abbaubare Material ein Cellulosefaser-freies Material ist.

Darüber hinaus kann vorgesehen sein, dass das Sicherheitselement mit zumindest eine Kunststoff-Folie umfassend das zumindest eine recycelte Material und/oder das zumindest eine Material aus nachwachsenden Rohstoffen und/oder das zumindest eine biologisch und/oder marin abbaubare Material ausgebildet ist. Dabei kann es sich beispielsweise um eine polymere Trägerfolie oder um ein Polymersubstrat handeln, auf welche das zumindest eine Sicherheitsmerkmale, sowie gegebenenfalls weitere Schichten wie Schutzlacke, Heißsiegellacke, Kleber, etc. aufgebracht sein können. Wenn es sich bei der Kunststoff-Folie um ein Polymersubstrat handelt, so kann dieses vorteilhafterweise nach einem der Ansprüche ausgebildet sein.

Vorteilhaft ist auch eine Ausprägung, gemäß welcher vorgesehen sein kann, dass das zumindest eine recycelte Material und/oder das zumindest eine biologisch und/oder marin abbaubare Material einen chemisch recycelten Kunststoff und/oder einen mechanisch recycelten Kunststoff umfasst, insbesondere einen lichtdurchlässigen, recycelten Kunststoff umfasst, wobei das zumindest eine recycelte Material und/oder das zumindest eine biologisch und/oder marin abbaubare Material bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybutylensuccinat (PBS), und Polybutylenadipat-terephthalat (PBAT) und/oder Mischungen und/oder Co-Polymere und/oder Verbundmaterialien dieser Materialien umfasst oder aus zumindest einem dieser Materialien hergestellt ist.

Mit chemischem Recycling sind Verfahren gemeint, bei welchen Kunststoffe durch thermische Einwirkung bzw. Energieeinwirkung bzw. durch chemische Prozesse in kürzere Moleküle aufgespalten werden, sodass ein erneuter Einsatz in nachfolgenden Herstellungsverfahren wie beispielsweise in einer Polymerisation, möglich ist. Einem chemischen Recycling können beispielsweise sogenannte PCR-Kunststoffe ("post consumer recycling"), PIR-Kunststoffe ("post industrial recycling"), sowie CCU-Kunststoffe ("carbon capture and utilization") zugeführt werden.

Zur Herstellung von PCR-Kunststoffen werden Kunststoffabfälle nach dem Endverbrauch wieder in Rohstoffe oder Monomere für die Herstellung neuer Rohstoffe verwendet und daraus beispielsweise Polymer-Folien oder Lackbestandteile hergestellt. So können z.B. PET-, PE- und PP-Folien mit einem gewissen Anteil an PCR-Rohstoffen bezogen werden. Die Herstellung von PIR-Kunststoffe erfolgt zumeist im Wesentlichen analog zur Herstellung von PCR-Kunststoffen. Allerdings kommen dabei Industrieabfälle zum Einsatz, welche in der Regel weniger stark verunreinigt bzw. sortenreiner sind. Zur Herstellung von CCU-Kunststoffen wird Kohlendioxid aus Abgasströmen oder aus der Luft abgeschieden und dient dann als Rohstoff bzw. Baustein für die Herstellung von Energieträgern wie Methan oder Methanol oder für die Herstellung von chemischen Rohstoffen wie Polycarbonaten oder PVC. Hierzu sind sowohl chemische, als auch biologische Verfahren mit Algen oder Mikroorganismen bekannt.

Mechanisch recycelter Kunststoff kann im Zuge eines stofflichen Recyclings gewonnen werden. Unter anderem können PCR-Kunststoffe und PIR-Kunststoffe mechanisch recycelt werden. Kunststoffabfälle werden nach der jeweiligen Kunststoffart sortiert und zu Rezyklaten aufbereitet, welche als Ausgansstoff für neue Produkte dienen können und damit Kunststoffe aus Neumaterialien ersetzten können. Bei dieser Art des Recyclings bleibt die ursprüngliche chemische Struktur der Polymere erhalten.

Gemäß einer Weiterbildung ist es möglich, dass das zumindest eine recycelte Material und/oder das zumindest eine biologisch und/oder marin abbaubare Material zumindest ein recyceltes metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen, und/oder zumindest ein hochbrechendes dielektrisches Material mit einem Brechungsindex von größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere oder Schichten aus Metalloxiden, wie beispielsweise unstöchiometrisches Aluminiumoxid, Kupferoxide, oder Chromoxide umfasst und/oder aus zumindest einem recycelten metallischen Material aus Druckfarben oder Lacken mit metallischen Pigmenten, insbesondere ausgewählt aus der Gruppe Aluminium, Silber, Kupfer, Gold, Platin, Niob, Zinn, oder aus Nickel, Titan, Vanadium, Chrom, Kobalt und Palladium oder Legierungen dieser Materialien, insbesondere Kobalt-Nickel-Legierungen hergestellt ist.

Durch den Einsatz von nachhaltigen Rohstoffen für verschiedene Beschichtungsstoffe (z.B. Lackbestandteile, Metalle wie Aluminium aus recyceltem Aluminium, etc.) ist es möglich geworden, nachhaltige Sicherheitselemente herzustellen.

Sicherheitsmerkmale erhöhen die Fälschungssicherheit und dienen der Echtheitszertifizierung von Sicherheitselementen, respektive von Wertdokumenten und Sicherheitsdokumenten. Es kann zweckmäßig sein, wenn das zumindest eine Sicherheitsmerkmal durch eine geprägte Schicht, eine partielle metallisierte Schicht, eine fluoreszierende Schicht, eine gedruckte Schicht, eine magnetische Codierung und/oder ein optisch variables und/oder optisch wirksames Merkmal, insbesondere durch ein Hologramm und/oder eine farbkippende Beschichtung, beispielsweise eine zumindest ein farbkippendes Dünnschichtelement aufweisende Beschichtung, und/oder durch in Transmission oder Reflexion optisch erkennbare Merkmale, maschinenlesbare Merkmale (wie z.B. Magnetcodierungen) und/oder durch elektromagnetische Wellen absorbierende und/oder reemittierende Stoffe bzw. Merkmale gebildet ist. Das zumindest eine Sicherheitsmerkmal kann auch durch lumineszierende bzw. phosphoreszierende Beschichtungen gebildet sein. Der Fachwelt ist auch eine Klassifizierung von Sicherheitsmerkmalen in drei Levels geläufig. Dabei umfasst Level 1 für einen Betrachter sichtbare Sicherheitsmerkmale, beispielsweise Hologramme, Wasserzeichen, Sicherheitsfäden, etc. Level 2 umfasst verdeckte, also für einen Betrachter ohne Hilfsmittel nicht sichtbare Sicherheitsmerkmale, wie beispielsweise fluoreszierende Merkmale, Infrarot-sichtbare Merkmale, Mikroschriften, maschinenlesbare Merkmale, etc. Level 3 umfasst forensisch erfassbare Merkmale bzw. Merkmale, für deren Detektion spezielle Methoden bzw. Hilfsmittel erforderlich sind, wie beispielsweise nanooptische Strukturen oder biochemische Merkmale.

Unter optisch variable und/oder optisch wirksame Sicherheitsmerkmale bzw. Level 1 Sicherheitsmerkmale fallen beispielsweise auch optisch wirksame Reliefstrukturen, insbesondere Spiegel, Beugungsgitter, Hologramme, Kinoforme, asymmetrische Beugungsstrukturen, Mattstrukturen, insbesondere anisotrope Mattstrukturen, Blazegitter, Beugungsstrukturen Nullter Ordnung, fresnelartige Freiformflächen, plasmonische Strukturen, reflektive Strukturen, insbesondere Mikrospiegelanordnungen, lichtbrechende oder fokussierende Strukturen, insbesondere Mikrolinsenanordnung, Volumenhologramme und Farbkippeffekte (auf Basis von Dünnfilmelementen, Flüssigkristallen, farbkippenden Pigmenten, etc.).

Darüber hinaus kann vorgesehen sein, dass das zumindest eine Sicherheitsmerkmal ein optisch variables Sicherheitsmerkmal umfasst, und dass die zumindest eine Kunststoff-Folie eine PET-Folie umfasst, welche PET-Folie mit zumindest 50% PCR-Material hergestellt ist. Hierbei kann beispielsweise auch vorgesehen sein, dass das Sicherheitselement als Sicherheitsfaden ausgebildet ist. Bei dem Sicherheitsmerkmal kann es sich beispielsweise um einen farbkippenden Dünnschichtaufbau handeln.

Des Weiteren kann vorgesehen sein, dass das Sicherheitselement mit einer optisch variablen Prägung in einem Prägelack mit mindestens 20% Acrylat-Monomeren aus nachwachsenden Rohstoffen hergestellt ist. Beispielsweise können hier bio-basierte und bio-abbaubare Prägelacke auf PLA Basis eingesetzt werden. Als Materialien für die Prägelackschicht eignen sich beispielsweise auch thermoplastische Polymere wie Polymethylmethacrylat (PMMA), Acrylate, PVC, Polyurethane (PU) oder ähnlichen Materialien, oder radikalisch oder kationisch härtende UV-Lacke, die auf Polyester-, PU- oder Acrylat-Bindemittel basieren. Beispielsweise kann es sich bei dem Sicherheitselement um eine Transferfolie handeln.

Die Erfindung betrifft auch ein Polymersubstrat zur Herstellung von Polymer-Wertdokumenten oder Polymer-Sicherheitsdokumenten oder zur Herstellung von Sicherheitselementen. Dabei ist vorgesehen, dass das Polymersubstrat zumindest ein recyceltes Material, und/oder zumindest ein Material aus nachwachsenden Rohstoffen, und/oder zumindest ein biologisch und/oder marin abbaubares Material umfasst.

Bei dem zumindest einen recycelten Material kann es sich um jegliche Art von recycelbaren Materialien oder Materialzusammensetzungen handeln. Beispielsweise sind damit jegliche Art von Kunststoffen umfasst, sowie auch Metalle, Metalllegierungen oder Metallverbindungen. Auch diverse chemische Zusammensetzungen können recycelbar sein und damit als recyceltes Material in dem Sicherheitselement umfasst sein. Wenn das Polymersubstrat aus mehreren Schichten, Folien bzw. Komponenten aufgebaut ist, kann es zweckmäßig sein, wenn in diesen Einzelbestandteilen verschiedene Arten von recyceltem Material eingesetzt werden.

Dadurch wird die Nachhaltigkeit des Polymersubstrates bzw. dessen gesamter Produktlebenszyklus verbessert, da durch den Einsatz des zumindest einen recycelten Materials eine nachhaltige Herstellung von fälschungssicheren Polymersubstraten bzw. von fälschungssicheren Wert- oder Sicherheitsdokumenten ermöglicht ist. Durch den Einsatz von zumindest einem recycelten Material bei der Herstellung von Polymersubstraten, werden Mittel geschaffen, welche den steigenden ökologischen Anforderungen entsprechen und welche gleichzeitig die erforderliche Fälschungssicherheit garantieren.

Durch den alternativen oder zusätzlichen Einsatz von zumindest einem Material aus nachwachsenden Rohstoffen und/oder von biologisch und/oder marin abbaubarem Material kann ein nachhaltiger Lebenszyklus des Polymersubstrates weiter verbessert werden. Darüber hinaus kann damit ein wertvoller Beitrag zum Umweltschutz geleistet werden. Bei dem Material aus nachwachsenden Rohstoffen bzw. bei dem biologisch und/oder marin abbaubaren Material kann es sich um ein anderes Material als dem recycelten Material handeln. Besonders nachhaltig ist es jedoch, wenn es sich bei dem Material aus nachwachsenden Rohstoffen bzw. bei dem biologisch und/oder marin abbaubaren Material um dasselbe Material handelt, wie dem recycelten Material.

Entsprechend einer vorteilhaften Weiterbildung kann vorgesehen sein, dass das Polymersubstrat mindestens 10%, bevorzugt mindestens 20%, besonders bevorzugt mindestens 30%, insbesondere mindestens 50% des zumindest einen recycelten Materials und/oder des zumindest einen Materials aus nachwachsenden Rohstoffen und/oder des zumindest einen biologisch und/oder marin abbaubaren Materials umfasst, oder dass das Polymersubstrat mindestens 10%, bevorzugt mindestens 20%, besonders bevorzugt mindestens 30%, insbesondere mindestens 50% mehrerer recycelter Materialien und/oder mehrerer Materialien aus nachwachsenden Rohstoffen und/oder mehrerer biologisch und/oder marin abbaubarer Materialien umfasst.

Insbesondere kann es vorteilhaft sein, wenn das zumindest eine recycelte Material, und/oder das zumindest eine Material aus nachwachsenden Rohstoffen, und/oder das zumindest eine biologisch und/oder marin abbaubare Material ein Cellulosefaser-freies Material ist.

Ferner kann vorgesehen sein, dass das zumindest eine recycelte Material und/oder das zumindest eine biologisch und/oder marin abbaubare Material einen chemisch recycelten Kunststoff und/oder einen mechanisch recycelten Kunststoff umfasst, insbesondere einen lichtdurchlässigen recycelten Kunststoff umfasst, wobei das zumindest eine recycelte Material und/oder das zumindest eine biologisch und/oder marin abbaubare Material bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybuty-lensuccinat (PBS), und Polybutylenadipat-terephthalat (PBAT) und/oder Mischungen und/oder Co-Polymere und/oder Verbundmaterialien dieser Materialien umfasst oder aus zumindest einem dieser Materialien hergestellt ist.

Darüber hinaus kann vorgesehen sein, dass das Polymersubstrat ein Sicherheitselement nach einem der Ansprüche umfasst.

Die Erfindung betrifft zudem auch ein Wertdokument oder Sicherheitsdokument, welches zumindest ein recyceltes Material, und/oder zumindest ein Material aus nachwachsenden Rohstoffen, und/oder zumindest ein biologisch und/oder marin abbaubares Material umfasst, wobei das zumindest eine recycelte Material, und/oder das zumindest eine Material aus nachwachsenden Rohstoffen, und/oder das zumindest eine biologisch und/oder marin abbaubare Material ein Cellulosefaser-freies Material ist.

Das zumindest eine recycelte Materialen, das zumindest eine Material aus nachwachsenden Rohstoffen bzw. das zumindest eine biologisch und/oder marin abbaubare Material kann beispielsweise in einzelnen oder auch mehreren Komponenten wie Schichten, Folien, Substraten oder dergleichen enthalten sein.

Bei dem zumindest einen recycelten Material kann es sich um jegliche Art von recycelbaren Materialien oder Materialzusammensetzungen handeln. Beispielsweise sind damit jegliche Art von Kunststoffen umfasst, sowie auch Metalle, Metalllegierungen oder Metallverbindungen. Auch diverse chemische Zusammensetzungen können recycelbar sein und damit als recyceltes Material in dem Sicherheitselement umfasst sein. Weil Wertdokumente oder Sicherheitsdokumente zumeist aus mehreren Schichten, Folien bzw. Komponenten aufgebaut sind, kann es dabei zweckmäßig sein, wenn in diesen Einzelbestandteilen verschiedene Arten von recyceltem Material eingesetzt werden.

Dadurch wird die Nachhaltigkeit des Wertdokuments oder Sicherheitsdokuments bzw. dessen gesamter Produktlebenszyklus verbessert, da durch den Einsatz des zumindest einen recycelten Materials eine nachhaltige Herstellung von fälschungssicheren Wert- oder Sicherheitsdokumenten, insbesondere von Banknoten, ermöglicht ist. Durch den Einsatz von zumindest einem recycelten Material, wird ein Produkt geschaffen, welches den steigenden ökologischen Anforderungen entspricht und welches gleichzeitig die erforderliche Fälschungssicherheit garantiert.

Durch den alternativen oder zusätzlichen Einsatz von zumindest einem Material aus nachwachsenden Rohstoffen und/oder von biologisch und/oder marin abbaubarem Material kann der nachhaltige Lebenszyklus des Wertdokuments oder Sicherheitsdokuments weiter verbessert werden. Darüber hinaus kann damit ein wertvoller Beitrag zum Umweltschutz geleistet werden. Bei dem Material aus nachwachsenden Rohstoffen bzw. bei dem biologisch und/oder marin abbaubaren Material kann es sich um ein anderes Material als dem recycelten Material handeln. Besonders nachhaltig ist es jedoch, wenn es sich bei dem Material aus nachwachsenden Rohstoffen bzw. bei dem biologisch und/oder marin abbaubaren Material um dasselbe Material handelt, wie dem recycelten Material.

Gemäß einer Weiterbildung ist es möglich, dass das Wertdokument oder Sicherheitsdokument mindestens 10%, bevorzugt mindestens 20%, besonders bevorzugt mindestens 30%, insbesondere mindestens 50% des zumindest einen recycelten Materials und/oder des zumindest einen Materials aus nachwachsenden Rohstoffen und/oder des zumindest einen biologisch und/oder marin abbaubaren Materials umfasst, oder dass das Wertdokument oder Sicherheitsdokument mindestens 20%, besonders bevorzugt mindestens 30%, insbesondere mindestens 50% mehrerer recycelter Materialien und/oder mehrerer Materialien aus nachwachsenden Rohstoffen und/oder mehrerer biologisch und/oder marin abbaubarer Materialien umfasst.

Ferner kann es zweckmäßig sein, wenn das Wertdokument oder Sicherheitsdokument ein Sicherheitselement nach einem der Ansprüche umfasst.

Darüber hinaus kann auch vorgesehen sein, dass das Wertdokument oder Sicherheitsdokument ein Polymer-Wertdokument oder Polymer-Sicherheitsdokument ist, welches ein Polymersubstrat nach einem der Ansprüche umfasst.

Wenn das Wertdokument oder Sicherheitsdokument zumindest ein Material aus nachwachsenden Rohstoffen umfasst und/oder wenn das Wertdokument oder Sicherheitsdokument biologisch und/oder marin abbaubar ist, hat sich beispielsweise für die Herstellung von Polymer-Banknoten der Einsatz von biaxial orientiertem Polypropylen (BOPP) aus nachwachsenden Rohstoffen als vorteilhaft erwiesen.

Zum besseren Verständnis der Erfindung wird diese anhand der nachfolgenden Figuren näher erläutert.

Es zeigen jeweils in stark vereinfachter, schematischer Darstellung:
- Fig. 1: eine Cellulosefaser-basierte Banknote mit einem Sicherheitselement in Aufsicht,
- Fig. 2: die Cellulosefaser-basierte Banknote aus Fig. 1 in Schnittansicht,
- Fig. 3: eine Polymer-Banknote mit einem Polymersubstrat und mit zwei Sicherheitselementen in Schnittansicht,
- Fig. 4: ein Ausführungsbeispiel eines Sicherheitselementes mit farbkippendem Dünnschichtaufbau in Schnittansicht,
- Fig. 5: ein weiteres Ausführungsbeispiel eines Sicherheitselementes mit optisch variabler Prägung in Schnittansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

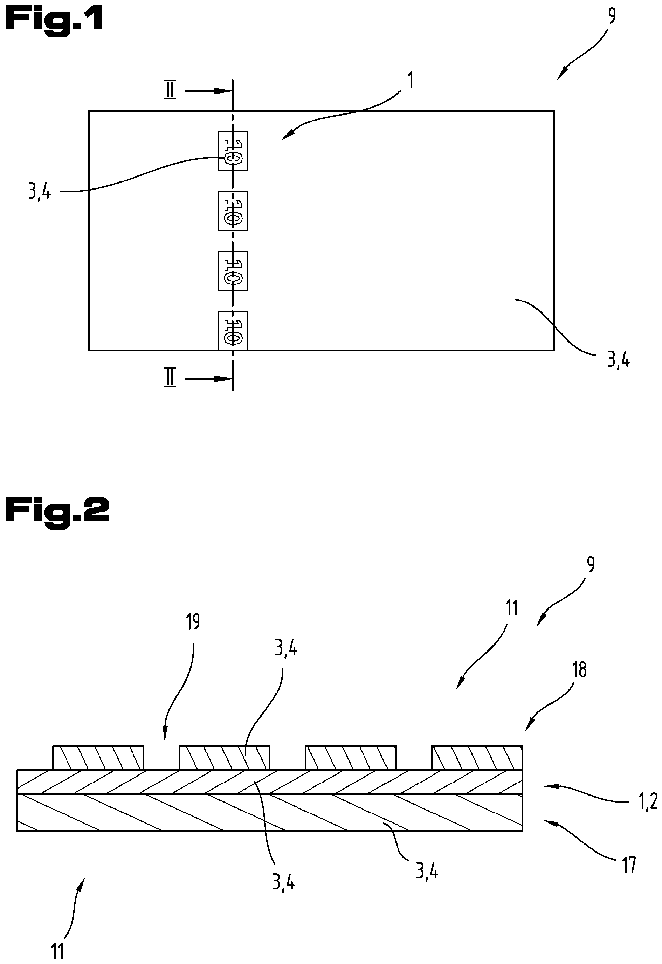

Die Fig. 1 bis 3 werden nachfolgend weitgehend in einer Zusammenschau beschrieben, um unnötige Wiederholungen zu vermeiden.

In den Fig. 1 und 2 ist ein Ausführungsbeispiel eines Wertdokuments oder Sicherheitsdokuments in der speziellen Ausprägung einer Papier-Banknote 9 in Aufsicht und in seitlicher Schnittansicht gezeigt.

Die Papier-Banknote 9 umfasst zumindest ein recyceltes Material 3, und/oder zumindest ein Material aus nachwachsenden Rohstoffen, und/oder zumindest ein biologisch und/oder marin abbaubares Material 4, wobei das zumindest eine recycelte Material 3, und/oder das zumindest eine Material aus nachwachsenden Rohstoffen, und/oder das zumindest eine biologisch und/oder marin abbaubare Material 4 ein Cellulosefaser-freies Material ist.

Die Papier-Banknote 9 umfasst im Wesentlichen ein Cellulosefaser-basiertes Substrat 17 und ein als Sicherheitsfaden, insbesondere als Fensterfaden, ausgebildetes Sicherheitselement 1. Dabei ist vorgesehen, dass das Sicherheitselement 1 zumindest ein recyceltes Material 3 und/oder zumindest ein Material aus nachwachsenden Rohstoffen und/oder zumindest ein biologisch und/oder marin abbaubares Material 4 umfasst. Es kann auch sein, dass das Cellulosefaser-basierte Substrat 17 zumindest ein recyceltes Material 3 und/oder zumindest ein Material aus nachwachsenden Rohstoffen und/oder zumindest ein biologisch und/oder marin abbaubares Material 4 umfasst.

Das Sicherheitselement 1 ist auf dem Cellulosefaser-basierten Substrat 17 angeordnet. Das Sicherheitselement 1 könnte aber auch in dieses eingebettet sein. Zudem kann das Sicherheitselement 1 zumindest partiell von einer Schicht 18 überdeckt sein, so wie dies der Fig. 2 entnehmbar ist. Jene Bereiche bzw. Aussparungen des Sicherheitselements 1 bzw. des Sicherheitsmerkmals 2 , welche von der Schicht 18 nicht bedeckt bzw. überdeckt sind, sind für einen Betrachter als sogenannte Fenster 19 des Fensterfadens wahrnehmbar. Bei der Schicht 18 kann es sich - um ein paar Beispiele zu nennen - um einen Schutzlack, eine kratzfeste Folie, eine funktionale Schicht oder ähnliches handeln kann. Auch bei der Schicht 18 kann es sich um ein Sicherheitselement 1 handeln, und auch die Schicht 18 kann ein recyceltes Material 3 und/oder zumindest ein Material aus nachwachsenden Rohstoffen und/oder zumindest ein biologisch und/oder marin abbaubares Material 4 umfassen. Die Schicht 18 kann auch Teil des Cellulosefaser-basierten Substrats 17 sein bzw. ein solches umfassen. Es kann auch sein, dass die Schicht 18 ein Cellulosefaser-basiertes Material ist oder ein solches umfasst.

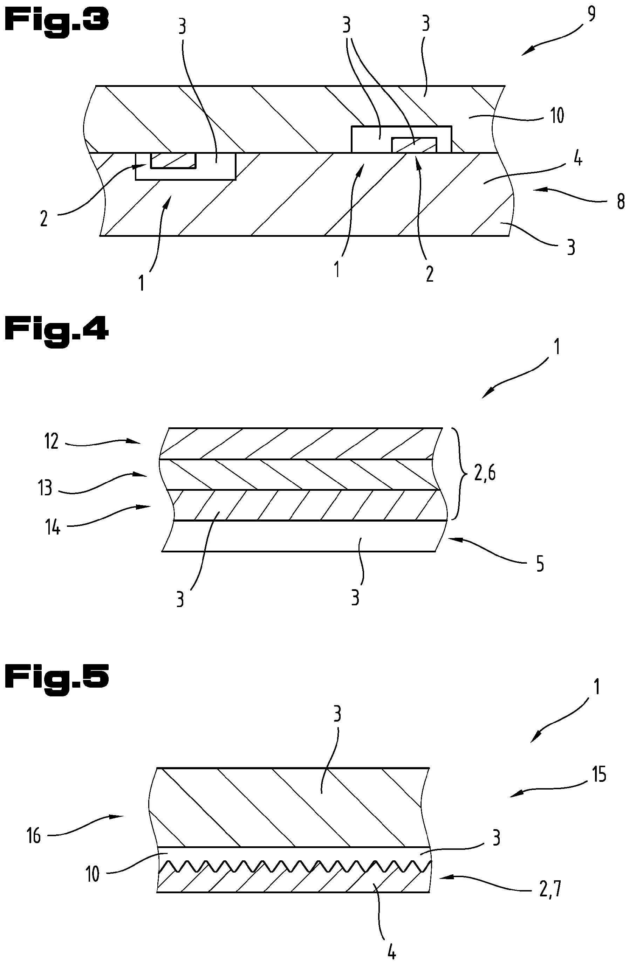

In der Fig. 3 ist ein Wertdokument oder Sicherheitsdokument in der speziellen Ausprägung einer Polymer-Banknote 9 in seitlicher Schnittansicht gezeigt. Die Polymer-Banknote 9 umfasst im Wesentlichen ein Polymersubstrat 8 und zwei Sicherheitselemente 1. Dabei ist vorgesehen, dass die Polymer-Banknote 9 zumindest ein recyceltes Material 3 umfasst. Auf dem Polymersubstrat 8 und den beiden Sicherheitselementen 1 ist dabei eine Schutzschicht 10 angeordnet, welche durchsichtig oder zumindest durchscheinend sein kann. Das recycelte Material 3, wie zum Beispiel ein recycelter Lack oder recycelte Lackbestandteile, kann beispielsweise in der Schutzschicht 10 umfasst sein.

Es versteht sich von selbst, dass die Darstellung der Figuren lediglich grob schematisch zu interpretieren ist. So sind die beiden Sicherheitselemente 1 in der Fig. 3 mit rechteckigem Querschnitt skizziert, wobei dem Fachmann natürlich eine Vielzahl möglicher spezieller Ausbildungen bekannt ist, auf welche an dieser Stelle nicht näher eingegangen wird. Gemäß dem Beispiel in der Fig. 1 weist jedes der beiden Sicherheitselemente 1 jeweils ein Sicherheitsmerkmal 2 auf, wobei auch diese lediglich schematisch skizziert sind. Selbstverständlich kann ein Sicherheitselement 1 auch mehrere gleichartige oder auch verschiedene Sicherheitsmerkmale 2 aufweisen.

In der Fig. 3 ist gezeigt, dass Sicherheitselemente 1 in dem Polymersubstrat 8 eingebettet sein können. Darüber hinaus können Sicherheitselemente 1 auch auf dem Polymersubstrat 8 - direkt oder distanziert durch eine oder mehrere Zwischenschichten - appliziert sein. Das Polymersubstrat 8 und auch die Sicherheitselemente 1 können mittels einer oder mehrerer weiterer Schichten - partiell oder wie dargestellt vollständig - bedeckt bzw. überdeckt sein. Natürlich können auch noch weitere Schichten wie Schutzlacke, Heißsiegellacke, Kleber, etc. aufgebracht sein.

Es hat sich hier als zweckmäßig erwiesen, wenn das gemäß Fig. 1 und 2 als Papier-Banknote 9 oder das gemäß Fig. 3 als Polymer-Banknote 9 ausgebildete Wertdokument oder Sicherheitsdokument mindestens 10%, bevorzugt mindestens 20%, besonders bevorzugt mindestens 30%, insbesondere mindestens 50% des zumindest einen recycelten Materials 3 und/oder des zumindest einen Materials aus nachwachsenden Rohstoffen und/oder des zumindest einen biologisch und/oder marin abbaubaren Materials 4 umfasst. Es kann aber auch sein, dass das Wertdokument oder Sicherheitsdokument mindestens 20%, besonders bevorzugt mindestens 30%, insbesondere mindestens 50% mehrerer verschiedener recycelter Materialien und/oder mehrerer Materialien aus nachwachsenden Rohstoffen und/oder mehrerer biologisch und/oder marin abbaubarer Materialien umfasst.

Die in der Fig. 3 gezeigten Sicherheitselemente 1 umfassen zumindest ein recyceltes Material 3. Das recycelte Material 3 kann dabei sowohl in Sicherheitsmerkmal 2 umfasst sein, als auch in dem Grundaufbau des Sicherheitselements 1. Darüber hinaus umfasst auch das Polymersubstrat 8 zumindest ein recyceltes Material 3. Natürlich muss es sich hierbei nicht um dasselbe Material handeln. So kann beispielsweise das Sicherheitselement 1 Anteile von recyceltem Aluminium aufweisen, während das Polymersubstrat 8 zumindest teilweise aus recyceltem Kunststoff besteht. Die Sicherheitselemente 1, sowie das Polymersubstrat 8 können mindestens 10%, bevorzugt mindestens 20%, besonders bevorzugt mindestens 30%, insbesondere mindestens 50% des zumindest einen recycelten Materials 3 umfassen.

Die Sicherheitselemente 1 können zumindest ein Material aus nachwachsenden Rohstoffen umfassen. Alternativ oder zusätzlich können die Sicherheitselemente 1 zumindest ein Material aus nachwachsenden Rohstoffen und/oder zumindest ein biologisch und/oder marin abbaubares Material 4 umfassen. Diese Eigenschaften können auch bei dem Polymersubstrat 8 vorteilhaft sein. Bei dem Material aus nachwachsenden Rohstoffen bzw. bei dem biologisch und/oder marin abbaubares Material 4 kann es sich grundsätzlich auch um dasselbe Material handeln, wie dem recycelten Material 3. Dabei können mindestens 10%, bevorzugt mindestens 20%, besonders bevorzugt mindestens 30%, insbesondere mindestens 50% des zumindest einen Materials aus nachwachsenden Rohstoffen und/oder des biologisch und/oder marin abbaubaren Materials 4 umfasst sein.

Zweckmäßigerweise kann es sich bei dem in den Sicherheitselementen 1 oder in dem Polymersubstrat 8 umfassten zumindest eine recycelte Material 3, und/oder bei dem zumindest einen Material aus nachwachsenden Rohstoffen, und/oder bei dem zumindest einen biologisch und/oder marin abbaubaren Material 4 um ein Cellulosefaser-freies Material handeln.

Das in den Sicherheitselementen 1 bzw. dem Polymersubstrat 8 umfasste zumindest eine recycelte Material 3 und/oder das zumindest eine biologisch und/oder marin abbaubare Material 4 kann einen chemisch recycelten Kunststoff und/oder einen mechanisch recycelten Kunststoff umfassen. Insbesondere kann es einen lichtdurchlässigen, recycelten Kunststoff umfassen, wobei das zumindest eine recycelte Material 3 bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), EthylenTetrafluorethylen-Hexafluorpropylen-Fluorterpolymer (EFEP), Cellulose- oder Lignin-basierte Kunststoffe, Polyhydroxyalkanoate (PHA), thermoplastische Stärke (TPS), Polymilchsäure (PLA), Polycaprolacton (PCL), Polybutylensuccinat (PBS), und Polybutylenadipat-terephthalat (PBAT) und/oder Mischungen und/oder Co-Polymere und/oder Verbundmaterialien dieser Materialien umfassen oder aus zumindest einem dieser Materialien hergestellt sein.

Das zumindest eine recycelte Material 3 und/oder das zumindest eine biologisch und/oder marin abbaubare Material 4 kann zumindest ein recyceltes metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen, und/oder zumindest ein hochbrechendes dielektrisches Material mit einem Brechungsindex von größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere oder Schichten aus Metalloxiden, wie beispielsweise unstöchiometrisches Aluminiumoxid, Kupferoxide, oder Chromoxide umfassen und/oder aus zumindest einem recycelten metallischen Material aus Druckfarben oder Lacken mit metallischen Pigmenten, insbesondere ausgewählt aus der Gruppe Aluminium, Silber, Kupfer, Gold, Platin, Niob, Zinn, oder aus Nickel, Titan, Vanadium, Chrom, Kobalt und Palladium oder Legierungen dieser Materialien, insbesondere Kobalt-Nickel-Legierungen hergestellt sein.

Die beiden dargestellten Sicherheitsmerkmale 2 können beispielsweise durch eine geprägte Schicht, eine partielle metallisierte Schicht, eine fluoreszierende Schicht, eine gedruckte Schicht, eine magnetische Codierung und/oder ein optisch variables und/oder optisch wirksames Merkmal, insbesondere durch ein Hologramm und/oder eine farbkippende Beschichtung, beispielsweise eine zumindest ein farbkippendes Dünnschichtelement aufweisende Beschichtung, und/oder durch in Transmission oder Reflexion optisch erkennbare Merkmale, maschinenlesbare Merkmale und/oder durch elektromagnetische Wellen absorbierende und/oder reemittierende Stoffe bzw. Merkmale gebildet sein.

In der Fig. 4 ist ein Ausführungsbeispiel eines Sicherheitselementes 1 mit einem Sicherheitsmerkmal 2 in der speziellen Ausprägung eines farbkippenden Dünnschichtaufbaus 6 gezeigt. Um unnötige Wiederholungen zu vermeiden, werden für gleiche Teile gleiche Bezugszeichen wie in der vorangegangenen Fig. 3 verwendet. Darüber hinaus wird auf die detaillierte Beschreibung in der vorangegangenen Fig. 3 hingewiesen bzw. Bezug genommen bzw. nachfolgend lediglich Unterschiede bzw. Besonderheiten dieses Ausführungsbeispiels erläutert.

Das in der Fig. 4 gezeigte Sicherheitselement 1 ist als Sicherheitsfaden ausgebildet, wobei ein optisch variables Sicherheitsmerkmal 2, konkret ein Sicherheitsmerkmal 2 mit einem farbkippenden Dünnschichtaufbau 6, ausgebildet ist. Der farbkippende Dünnschichtaufbau 6 ist dabei vereinfacht dargestellt und umfasst im Wesentlichen - gemäß der Darstellung in der Fig. 4 von oben nach unten bzw. von der Sichtseite 11 oder Betrachtungsseite her betrachtet - eine Absorberschicht 12, eine Distanzschicht 13 und eine Reflexionsschicht 14. Die Reflexionsschicht 14 ist dabei gemäß dem Beispiel in der Fig. 4 direkt auf einer Kunststoff-Folie 5 in der Funktion als Trägerfolie aufgebracht. Alternativ wäre es auch denkbar, dass nicht die Reflexionsschicht 14, sondern die Absorberschicht 12 auf die Kunststoff-Folie 5 aufgebracht ist. Dies insbesondere dann, wenn die Kunststoff-Folie 5 eine abziehbare Trägerfolie ist und nach dem Aufbringen des Sicherheitselements 1 auf beispielsweise eine Banknote 9 entfernt bzw. abgelöst wird. Als Bestandteil der Reflexionsschicht 14 kann dabei als recyceltes Material 3 recyceltes Aluminium verwendet werden. Die Kunststoff-Folie 5 umfasst dabei das zumindest eine recycelte Material 3. Die Darstellung zeigt lediglich einen stark vereinfachten Aufbau und es können - wie schon eingangs erwähnt - auch noch weitere zusätzliche Schichten und Zwischenschichten vorgesehen sein. Die Kunststoff-Folie 5 kann dabei bevorzugt als PET-Folie ausgebildet sein, welche mit zumindest 50% PCR-Material hergestellt ist.

In der Fig. 5 ist ein Ausführungsbeispiel eines Sicherheitselementes 1 mit einem Sicherheitsmerkmal 2 in der speziellen Ausprägung einer optisch variablen Prägung bzw. mit einem Prägelack 7 gezeigt. Um unnötige Wiederholungen zu vermeiden, werden für gleiche Teile gleiche Bezugszeichen wie in der vorangegangenen Fig. 3 verwendet. Darüber hinaus wird auf die detaillierte Beschreibung in der vorangegangenen Fig. 3 hingewiesen bzw. Bezug genommen bzw. nachfolgend lediglich Unterschiede bzw. Besonderheiten dieses Ausführungsbeispiels erläutert.

Das in der Fig. 5 gezeigte Sicherheitselement 1 ist als Transferfolie 15 bzw. als Transferfaden ausgebildet, wobei ein optisch variables Sicherheitsmerkmal 2 mit einem Prägelack 7 ausgebildet ist. Das Sicherheitselement 1 ist dabei vereinfacht dargestellt und umfasst im Wesentlichen - gemäß der Darstellung in der Fig. 5 von oben nach unten bzw. von der Sichtseite 11 oder Betrachtungsseite her betrachtet - eine lösbare bzw. nach der Applikation abziehbare Trägerfolie 16, eine Schutzschicht 10, sowie einen Prägelack 7 mit darin eingeprägten optisch variablen Strukturen. Die Schutzschicht 10 kann bevorzugt durchsichtig oder zumindest durchscheinend sein. Das recycelte Material 3, wie zum Beispiel ein recycelter Lack oder recycelte Lackbestandteile, kann beispielsweise in der Schutzschicht 10 umfasst sein. Bei der lösbaren Trägerfolie 16 kann es sich um eine Kunststoff-Folie 5 handeln, welche eine recyceltes Material 3 umfasst. So kann die lösbare Trägerfolie 16 beispielsweise als PET-Folie mit Anteilen von PCR- oder PIR-Material, ausgebildet sein. Diese Darstellung stellt lediglich einen stark vereinfachten Aufbau dar und es können - wie schon eingangs erwähnt - auch noch weitere zusätzliche Schichten und Zwischenschichten vorgesehen sein. Der Prägelack 7 kann dabei mit mindestens 20% Acrylat-Monomeren aus nachwachsenden Rohstoffen hergestellt sein. Beispielsweise können hier bio-basierte und bio-abbaubare Prägelacke 7 auf PLA Basis eingesetzt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Sicherheitselement
- 2: Sicherheitsmerkmal
- 3: recyceltes Material
- 4: biologisch und/oder marin abbaubares Material
- 5: Kunststoff-Folie
- 6: farbkippender Dünnschichtaufbau
- 7: Prägelack
- 8: Polymersubstrat
- 9: Banknote
- 10: Schutzschicht
- 11: Sichtseite
- 12: Absorberschicht
- 13: Distanzschicht
- 14: Reflexionsschicht
- 15: Transferfolie
- 16: lösbare Trägerfolie
- 17: Cellulosefaser-basiertes Substrat
- 18: Schicht
- 19: Fenster

## Patentansprüche

1. Sicherheitselement (1) für Wertdokumente oder Sicherheitsdokumente mit zumindest einem Sicherheitsmerkmal (2), **dadurch gekennzeichnet, dass** das Sicherheitselement (1) zumindest ein recyceltes Material (3), und/oder zumindest ein Material aus nachwachsenden Rohstoffen, und/oder zumindest ein biologisch und/oder marin abbaubares Material (4) umfasst.

2. Sicherheitselement (1) nach Anspruch 1, **dadurch gekennzeichnet, dass** das Sicherheitselement (1) mindestens 10%, bevorzugt mindestens 20%, besonders bevorzugt mindestens 30%, insbesondere mindestens 50% des zumindest einen recycelten Materials (3) und/oder des zumindest einen Materials aus nachwachsenden Rohstoffen und/oder des zumindest einen biologisch und/oder marin abbaubaren Materials (4) umfasst, oder dass das Sicherheitselement (1) mindestens 10%, bevorzugt mindestens 20%, besonders bevorzugt mindestens 30%, insbesondere mindestens 50% mehrerer recycelter Materialien und/oder mehrerer Materialien aus nachwachsenden Rohstoffen und/oder mehrerer biologisch und/oder marin abbaubarer Materialien umfasst.

3. Sicherheitselement (1) nach einem der vorhergehenden Ansprüche, **dadurch gekennzeichnet, dass** das zumindest eine recycelte Material (3), und/oder das zumindest eine Material aus nachwachsenden Rohstoffen, und/oder das zumindest eine biologisch und/oder marin abbaubare Material (4) ein Cellulosefaser-freies Material ist.

4. Sicherheitselement (1) nach einem der vorhergehenden Ansprüche, **dadurch gekennzeichnet, dass** das Sicherheitselement (1) mit zumindest einer Kunststoff-Folie (5) umfassend das zumindest eine recycelte Material (3) und/oder das zumindest eine Material aus nachwachsenden Rohstoffen und/oder das zumindest eine biologisch und/oder marin abbaubare Material (4) ausgebildet ist.

5. Sicherheitselement (1) nach einem der vorhergehenden Ansprüche, **dadurch gekennzeichnet, dass** das zumindest eine recycelte Material (3) und/oder das zumindest eine biologisch und/oder marin abbaubare Material (4) einen chemisch recycelten Kunststoff und/oder einen mechanisch recycelten Kunststoff umfasst, insbesondere einen lichtdurchlässigen, recycelten Kunststoff umfasst, wobei das zumindest eine recycelte Material (3) und/oder das zumindest eine biologisch und/oder marin abbaubare Material (4) bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybutylensuccinat (PBS), und Polybutylenadipat-terephthalat (PBAT) und/oder Mischungen und/oder Co-Polymere und/oder Verbundmaterialien dieser Materialien umfasst oder aus zumindest einem dieser Materialien hergestellt ist.

6. Sicherheitselement (1) nach einem der vorhergehenden Ansprüche, **dadurch gekennzeichnet, dass** das zumindest eine recycelte Material (3) und/oder das zumindest eine biologisch und/oder marin abbaubare Material (4) zumindest ein recyceltes metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen, und/oder zumindest ein hochbrechendes dielektrisches Material mit einem Brechungsindex von größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere oder Schichten aus Metalloxiden, wie beispielsweise unstöchiometrisches Aluminiumoxid, Kupferoxide, oder Chromoxide umfasst und/oder aus zumindest einem recycelten metallischen Material aus Druckfarben oder Lacken mit metallischen Pigmenten, insbesondere ausgewählt aus der Gruppe Aluminium, Silber, Kupfer, Gold, Platin, Niob, Zinn, oder aus Nickel, Titan, Vanadium, Chrom, Kobalt und Palladium oder Legierungen dieser Materialien, insbesondere Kobalt-Nickel-Legierungen hergestellt ist.

7. Sicherheitselement (1) nach einem der vorhergehenden Ansprüche, **dadurch gekennzeichnet, dass** das zumindest eine Sicherheitsmerkmal (2) durch eine geprägte Schicht, eine partielle metallisierte Schicht, eine fluoreszierende Schicht, eine gedruckte Schicht, eine magnetische Codierung und/oder ein optisch variables und/oder optisch wirksames Merkmal, insbesondere durch ein Hologramm und/oder eine farbkippende Beschichtung, beispielsweise eine zumindest ein farbkippendes Dünnschichtelement aufweisende Beschichtung, und/oder durch in Transmission oder Reflexion optisch erkennbare Merkmale, maschinenlesbare Merkmale und/oder durch elektromagnetische Wellen absorbierende und/oder reemittierende Stoffe bzw. Merkmale gebildet ist.

8. Sicherheitselement (1) nach Anspruch 4, **dadurch gekennzeichnet, dass** das zumindest eine Sicherheitsmerkmal (2) ein optisch variables Sicherheitsmerkmal (2) umfasst, und dass die zumindest eine Kunststoff-Folie (5) eine PET-Folie umfasst, welche PET-Folie mit zumindest 50% PCR-Material hergestellt ist.

9. Sicherheitselement (1) nach einem der vorhergehenden Ansprüche, **dadurch gekennzeichnet, dass** das Sicherheitselement (1) mit einer optisch variablen Prägung in einem Prägelack (7) mit mindestens 20% Acrylat-Monomeren aus nachwachsenden Rohstoffen hergestellt ist.

10. Polymersubstrat (8) zur Herstellung von Polymer-Wertdokumenten oder Polymer-Sicherheitsdokumenten oder zur Herstellung von Sicherheitselementen (1), **dadurch gekennzeichnet, dass** das Polymersubstrat (8) zumindest ein recyceltes Material (3), und/oder zumindest ein Material aus nachwachsenden Rohstoffen, und/oder zumindest ein biologisch und/oder marin abbaubares Material (4) umfasst.

11. Polymersubstrat (8) nach einem der vorhergehenden Ansprüche, **dadurch gekennzeichnet, dass** das Polymersubstrat (8) mindestens 10%, bevorzugt mindestens 20%, besonders bevorzugt mindestens 30%, insbesondere mindestens 50% des zumindest einen recycelten Materials (3) und/oder des zumindest einen Materials aus nachwachsenden Rohstoffen und/oder des zumindest einen biologisch und/oder marin abbaubaren Materials (4) umfasst, oder dass das Polymersubstrat (8) mindestens 20%, besonders bevorzugt mindestens 30%, insbesondere mindestens 50% mehrerer recycelter Materialien und/oder mehrerer Materialien aus nachwachsenden Rohstoffen und/oder mehrerer biologisch und/oder marin abbaubarer Materialien umfasst.

12. Polymersubstrat (8) nach einem der vorhergehenden Ansprüche, **dadurch gekennzeichnet, dass** das zumindest eine recycelte Material (3), und/oder das zumindest eine Material aus nachwachsenden Rohstoffen, und/oder das zumindest eine biologisch und/oder marin abbaubare Material (4) ein Cellulosefaser-freies Material ist.

13. Polymersubstrat (8) nach einem der vorhergehenden Ansprüche, **dadurch gekennzeichnet, dass** das zumindest eine recycelte Material (3) und/oder das zumindest eine biologisch und/oder marin abbaubare Material (4) einen chemisch recycelten Kunststoff und/oder einen mechanisch recycelten Kunststoff umfasst, insbesondere einen lichtdurchlässigen recycelten Kunststoff umfasst, wobei das zumindest eine recycelte Material (3) und/oder das zumindest eine biologisch und/oder marin abbaubare Material (4) bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybutylensuccinat (PBS), und Polybutylenadipat-terephthalat (PBAT) und/oder Mischungen und/oder Co-Polymere und/oder Verbundmaterialien dieser Materialien umfasst oder aus zumindest einem dieser Materialien hergestellt ist.

14. Polymersubstrat (8) nach einem der vorhergehenden Ansprüche, **dadurch gekennzeichnet, dass** das Polymersubstrat (8) ein Sicherheitselement (1) nach einem der Ansprüche 1 bis 9 umfasst.

15. Wertdokument oder Sicherheitsdokument, **dadurch gekennzeichnet, dass** das Wertdokument oder Sicherheitsdokument zumindest ein recyceltes Material (3), und/oder zumindest ein Material aus nachwachsenden Rohstoffen, und/oder zumindest ein biologisch und/oder marin abbaubares Material (4) umfasst, wobei das zumindest eine recycelte Material (3), und/oder das zumindest eine Material aus nachwachsenden Rohstoffen, und/oder das zumindest eine biologisch und/oder marin abbaubare Material (4) ein Cellulosefaser-freies Material ist.

16. Wertdokument oder Sicherheitsdokument nach Anspruch 15, **dadurch gekennzeichnet, dass** das Wertdokument oder Sicherheitsdokument mindestens 10%, bevorzugt mindestens 20%, besonders bevorzugt mindestens 30%, insbesondere mindestens 50% des zumindest einen recycelten Materials (3) und/oder des zumindest einen Materials aus nachwachsenden Rohstoffen und/oder des zumindest einen biologisch und/oder marin abbaubaren Materials (4) umfasst, oder dass das Wertdokument oder Sicherheitsdokument mindestens 20%, besonders bevorzugt mindestens 30%, insbesondere mindestens 50% mehrerer recycelter Materialien und/oder mehrerer Materialien aus nachwachsenden Rohstoffen und/oder mehrerer biologisch und/oder marin abbaubarer Materialien umfasst.

17. Wertdokument oder Sicherheitsdokument nach Anspruch 15 oder 16, **dadurch gekennzeichnet, dass** das Wertdokument oder Sicherheitsdokument ein Sicherheitselement (1) nach einem der Ansprüche 1 bis 9 umfasst und/oder dass das Wertdokument oder Sicherheitsdokument ein Polymer-Wertdokument oder Polymer-Sicherheitsdokument ist, welches ein Polymersubstrat (8) nach einem der Ansprüche 10 bis 14 umfasst.
